# EUROPÄISCHE PATENTSCHRIFT

(11) **EP 0 720 342 B1**
(45) Veröffentlichungstag und Bekanntmachung des Hinweises auf die Patenterteilung: **27.02.2002**
(21) Anmeldenummer: 95120069.0
(22) Anmeldetag: 19.12.1995
(51) Int. Cl.: H04M 11/04

(54) **Verfahren zur Inbetriebnahme eines Telefonwählgerätes in einem Alarmsystem**
Method for initiation of a telephone dialer in an alarm system
Procédé pour la mise en oeuvre d'un appareil de numérotage dans un système d'alarme

(30) Priorität: 23.12.1994 DE 4446207
(43) Veröffentlichungstag der Anmeldung: 03.07.1996
(73) Patentinhaber: GRUNDIG Aktiengesellschaft, 90471 Nürnberg (DE)
(72) Erfinder: Elsinger, Horst, Grundig E.M.V, D-90762 Fürth (DE); Mittelstädt, Rainer, Grundig E.M.V, D-90762 Fürth (DE)

(56) Entgegenhaltungen:
- WO-A-94/01963
- DE-A- 4 301 263
- GB-A- 2 242 100
- US-A- 5 272 465

## Beschreibung

Die Erfindung betrifft ein Verfahren zur Eingabe von Initialisierungsdaten bei der Inbetriebnahme eines Telefonwahlgerates zur Weiterleitung einer Alarmmeldung an eine Sicherheitszentrale gemäß dem Oberbegriff des Anspruches 1 und eine Vorrichtung zur Durchführung des Verfahrens nach dem Oberbegriff des Anspruches 7

Bekannte Anlagen zur Sicherung bzw. Überwachung von Gebäuden oder von Freigelände bestehen aus einer Alarmzentrale, an die verschiedene Melder, beispielsweise Bewegungsmelder, Glasbruchmelder usw. angeschlossen sind. Falls bei einem dieser Melder ein Alarmzustand eintritt, wird dieser sofort an die Alarmzentrale übertragen. In der Alarmzentrale werden die Meldungen ausgewertet und an Alarmgeber, beispielsweise Sirenen, zur Alarmausgabe weitergeleitet.

Ein Problem bei dieser Art der Alarmmeldung besteht vor allem bei der Überwachung von Privatobjekten, also Häuser, Wohnungen oder Privatgrundstücken dann, daß bei Abwesenheit der Besitzer der Alarm entweder überhaupt nicht wahrgenommen wird oder daß bei der Wahrnehmung des Alarms durch Nachbarn oder Passanten keine Reaktion erfolgt.

Aus diesem Grund wird bei einer Vielzahl von Alarmanlagen die Alarmzentrale mit einem Telefonwählgerät verbunden, das bei einem Alarmfall automatisch die Nummer einer Polizeidienststelle oder eines Sicherheitsdienstes wählt und eine kurze Meldung, die nur aus einem Signalton oder gegebenenfalls aus einer abgespeicherten, gesprochenen Wortfolge besteht, abgibt.

Aus der deutschen Offenlegungsschrift DE-OS 43 01 263 ist ein Notrufsendegerät zum Senden eines vorgespeicherten Rufsignales an eine externe Stationsleitung bekannt. Dieses Notrufsendegerät speichert ein Rufsignal, das bei Eintreten eines Notfalles, beispielsweise bei Feuer oder Einbruch, an eine Stationsleitung gesendet wird. Das Notrufsendegerät weist eine Dateneingabevorrichtung auf, mit der eine Telefonnummer eingegeben werden kann, die bei Auftreten eines Notfalles angerufen wird. Ferner kann der Benutzer eine Nachricht einspeichern, die an die Stationsleitung gesendet wird.

Bei derartigen Notrufsendegeräten ist es weiterhin bekannt, ein Paßwort, eine Kundennummer des Teilnehmers (Identnummer) und/oder eine Transfernummer einzugeben. Diese Nummern können mittels einer DTMF-Ziffernfolge (Dual-Tone-Multi-Frequency-Ziffernfolge) an die Stationsleitung oder Sicherheitszentrale durch ein Notrufsendegerät (Telefonwählgerät) übertragen werden.

Zur Vorbereitung dieser Art der Alarmweiterleitung ist es notwendig, daß der Händler oder Benutzer die entsprechenden Daten (Telefonnummer, Paßwort, usw.) vor Ort eingibt. Im weiteren muß die Sicherheitszentrale angerufen und ein Probealarm ausgelöst werden, damit die Zentrale die Richtigkeit der eingegebenen Daten überprüft und bestätigt.

Durch die manuelle Eingabe der Daten durch den Benutzer oder Händler wird die Inbetriebnahme der bekannten Telefonwählgeräte insofern erschwert, als Eingabefehler auftreten können, die das Wirksamwerden der Alarmweiterschaltung verhindern. Bei der Auslösung von Probealarmen wird zwar die Sicherheit bei der Inbetriebnahme erhöht, jedoch erhöht sich damit auch der Aufwand. Ein weiterer Nachteil der bekannten Telefonwählgeräte ist die notwendige Bekanntgabe der an sich geheimzuhaltenden Rufnummer der Sicherheitszentrale an die Vertragshändler (ggf. auch an die Benutzer der Alarmanlage). Auch wird die Bedienung des Telefonwählgerätes kompliziert, da entweder zusätzliche Bedienelemente angeordnet werden müssen oder das Programmenü erweitert werden muß.

Aus GB-A 2 242100 ist eine Kommunikationssteuereinheit für Alarmsysteme bekannt, bei der bei Auftreten eines Alarmsignals des Alarmsystems über eine öffentliche Telefonleitung eine Überwachungsstation gerufen werden kann. In einem Alarmfall wird dabei mittels codierter Audiowähltöne, z.B. DTMF-Signale, ein Zustandsbericht der Alarmanlage übermittelt. Es ist femer möglich, daß mittels der Kommunikationssteuereinheit von einer Service-Station aus beispielsweise das Alarmsystem getestet wird,
Operationsparameter geändert werden oder der Zustand des Alarmsystems abgefragt wird.

Es stellt sich deshalb die Aufgabe ein Verfahren zur Eingabe der für die Inbetriebnahme eines Telefonwählgerätes benötigten Initialisierungsdaten anzugeben, das die Bedienung vereinfacht und Bedienungsfehler weitgehend ausschließt und zudem die Geheimhaltung der Rufnummer der Sicherheitszentrale gewährleistet.

Diese Aufgabe wird ausgehend von den Merkmalen des Oberbegriffes des Anspruches 1 bzw. 7 durch die kennzeichnenden Merkmale des Anspruches 1 bzw. 7 gelöst.

Vorteilhafte Ausgestaltungen der Erfindung sind in den abhängigen Ansprüchen angegeben.
Gemäß der Erfindung werden die Initialisierungsdaten bei der Inbetriebnahme eines Telefonwählgerätes durch Fernübermittlung eines Datentelegrammes von der Sicherheitszentrale aus vorgenommen.

Das erfindungsgemäße Verfahren hat den Vorteil, daß der Benutzer oder Händler die Initialisierungsdaten nicht mehr manuell eingeben muß. Auf diese Weise wird das Initialisierungsverfahren vereinfacht und eine mögliche Fehlerquelle ausgeschaltet. Zudem ist die Geheimhaltung der Rufnummer der Sicherheitszentrale gewährleistet.

Eine vorteilhatte Ausgestaltung der Erfindung sieht vor, daß das von der Sicherheitszentrale übermittelte Datentelegramm ein Codewort enthält das mit einem im Telefonwählgerät abgespeicherten Codewort verglichen wird. Nur bei einer Übereinstimmung des übertragenen und des im Telefonwählgerät abgespeicherten Codewortes werden die Initialisierungsdaten in einen Speicher des Telefonwählgerätes abgelegt.

Auf diese Weise wird erreicht, daß kein unberechtigter Dritter Initialisierungsdaten an das Telefonwählgerät senden und somit die Alarmweiterleitung auf eine falsche Telefonnummer veranlassen kann.

Das im Speicher des Telefonwählgerätes abgelegte Codewort wird vorzugsweise werkseitig eingestellt. Das Codewort ist somit nur dem Hersteller des Telefonwählgerätes und der Sicherheitszentrale bekannt, wodurch Manipulationen weitgehend ausgeschlossen sind.

Eine weitere vorteilhafte Ausgestaltung des erfindungsgemäßen Verfahrens sieht vor, daß das von der Sicherheitszentrale übermittelte Datentelegramm nach dem Empfang im Telefonwahlgerät an die Sicherheitszentrale zurückgesendet wird.
In der Sicherheitszentrale können diese Daten mit den abgesendeten Daten verglichen werden. Damit ist eine unmittelbare Überprüfung möglich, bei der Ubermittlungsfehler sofort erkannt werden können.

In der Sicherheitszentrale können die rückübermittelten Daten zur Sichtung durch den Bediener auf einer Anzeigeeinheit dargestellt werden. Auf diese Weise ist eine zusätzliche Überprüfung, ob das Datentelegramm fehlerfrei übermittelt wurde, durch den Bediener in der Sicherheitszentrale gegeben.

Eine weitere Erhöhung der Sicherheit gegenüber Manipulationen Dritter wird erreicht, indem mit jedem übermittelten Datentelegramm ein neues Codewort übertragen wird, das für die nächste Übermittlung eines Datentelegrammes gültig ist.
Auf diese Weise ist ein erneuter Zugriff auf das Telefonwählgerät nur der Sicherheitszentrale möglich, da nur sie das neue Codewort kennt. Es kann somit ausgeschlossen werden, daß nach der Inbetriebnahme eines Telefonwählgerätes mittels des werkseitig voreingestellten Codewortes die gültigen Daten manipuliert werden.

Die Übermittlung der Datentelegramme erfolgt in besonders einfacher Weise mittels einer DTMF-Ziffernfolge.

Das erfindungsgemäße Verfahren weist neben der Vereinfachung der Erstinbetriebnahme eines Telefonwählgerätes und der Erhöhung der Manipulationssicherheit auch den Vorteil auf, daß sich ergebende Änderungen auf einfache Weise durch die Sicherheitszentrale vorgenommen werden können. So können beispielsweise bei einer Änderung der Telefonnummer der Sicherheitszentrale alle angeschlossenen Telefonwählgeräte von der Sicherheitszentrale automatisch auf die neue Rufnummer umgestellt werden. Nach den bisher bekannten Verfahren wären die Händler zu informieren gewesen und sie hatten die von ihnen ausgelieferten Geräte manuell umstellen müssen.

Die erfindungsgemaße Vorrichtung zur Durchführung des oben beschriebenen Verfahrens besteht aus einem Telefonwählgerät, das mit einem nach dem Multi-Frequenz-Verfahren arbeitendem Sender (MFV-Sender) und einem MFV-Empfanger ausgestattet ist und über eine Eingabeeinheit verfügt

Eine derartige Vorrichtung wird gemaß der Erfindung mit einem Alarmsystem verbunden und die MFV-Sender und -Empfänger sind über einen Telefonanschluß mit der Sicherheitszentrale verbunden.
Mit dieser Vorrichtung wird auf einfache und somit kostengünstige Weise die Verbindung zur Sicherheitszentrale hergestellt, wobei diese Verbindung bidirektional ist, d.h. es können Daten sowohl von der Sicherheitszentrale zum Telefonwählgerät als auch umgekehrt übermittelt werden.

Das Telefonwählgerät ist in vorteilhafter Weise mit einem ROM-Speicher ausgestattet, in dem ein voreingestelltes Codewort abgelegt ist, das den Zugang bei der ersten Datenübermittlung von der Sicherheitszentrale zum Telefonwählgerät ermoglicht.
Das Telefonwahlgerat verfugt zusatzlich über einen wiederbeschreibbaren Speicher zur Abspercherung von Datentelegrammen und geanderten Codewortern.

Vor allem durch die Möglichkeit zur Abspeicherung von geänderten Codewörtern kann die Manipulationssicherheit erhöht werden, da die geänderten Codewörter ausschließlich der Sicherheitszentrale bekannt sind.

Das erfindungsgemäße Telefonwählgerät kann in besonders vorteilhafter Weise eine bauliche Einheit mit einem Telefonanrufbeantworter bilden, da in diesem Fall eine Anzahl von Funktionseinheiten gemeinsam genutzt werden können.

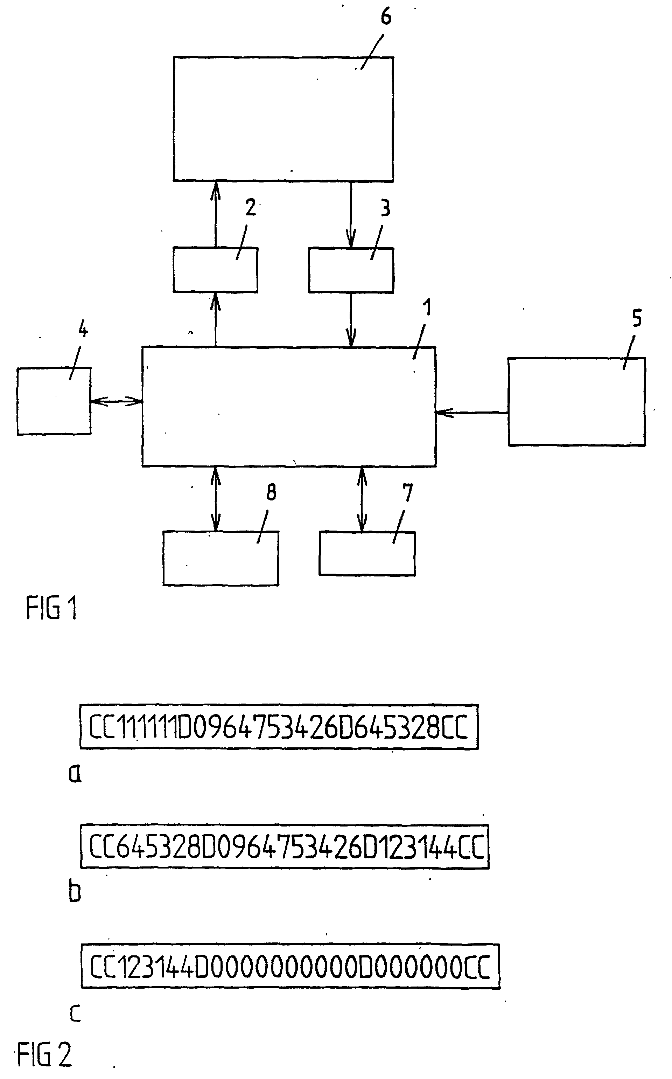

Im folgenden wird die Erfindung an Hand der Figuren 1 und 2 beschrieben.

Figur 1 zeigt ein bevorzugtes Ausführungsbeispiel der erfindungsgemäßen Vorrichtung

Figur 2 zeigt ein Beispiel eines Datentelegrammes.

Das Telefonwahlgerat 1 gemaß Figur 1 ist mit einem MFV-Sender 2 zum Absenden von Datentelegrammen, die vorzugsweise aus DTMF-Ziffernfolgen bestehen, verbunden. Zum Empfang von Datentelegrammen ist das Telefonwählgerät weiterhin mit einem MFV-Empfänger 3 verbunden Das Telefonwahlgerat verfügt weiterhin über eine Eingabeeinheit 4 zur Dateneingabe.
Der MFV-Sender und der MFV-Empfänger sowie die Eingabeeinheit sind vorzugsweise im Telefonwahlgerät integriert. Durch die Integration dieser Einheiten im Gerat ist eine Verkabelung durch den Benutzer nicht notwendig.

Das Telefonwählgerät 1 ist weiterhin mit einem Alarmsystem 5 verbunden. Das Alarmsystem 5 beinhaltet eine Alarmzentrale und Meldeeinheiten, beispielsweise Bewegungsdetektoren, Glasbruchmelder, Feuermelder u.a. Die Meldungen der Alarmmelder werden in der Alarmzentrale ausgewertet und im Bedarfsfall wird eine Meldung an das Telefonwählgerät gegeben, das automatisch ein Datentelegramm an die Sicherheitszentrale 6 absendet.

Das Telefonwählgerät weist weiterhin einen ROM-Speicher 7 auf, in dem ein voreingestelltes Codewort abgelegt ist, das den Zugang zum Telefonwählgerät ermöglicht. Zur Änderung des Codewortes ist ferner ein wiederbeschreibbarer Speicher 8 vorgesehen, in dem das neue Codewort abgelegt werden kann. Dieser Speicher dient weiterhin dazu, Datentelegramme abzuspeichern.

Zur Erstinbetriebnahme des Telefonwählgerätes 1 muß von der Sicherheitszentrale 6 ein Datentelegramm übertragen werden, das vorzugsweise ein Codewort beinhaltet, das den Zugriff erlaubt. Das Datentelegramm enthalt weiterhin die Telefonnummer der Sicherheitszentrale 6 und eine Kundennummer.

In Figur 2 sind Beispiele von Datentelegrammen dargestellt Jedes Datentelegramm beginnt mit einem Sonderzeichen. im Fall der Figur 2 sind dies die Zeichen "CC" Diesem Sonderzeichen folgt das Codewort, das im vorliegenden Fall aus 6 Ziffern besteht In Figur 2a ist ein voreingestelltes Codewort "111111" angegeben, das bei der Initialisierung des Telefonwahlgerates den Zugang erlaubt Dieses Codewort wird mit dem im ROM-Speicher 7 abgelegten Codewort verglichen. Wenn die Codeworter übereinstimmen, wird das Datentelegramm im Speicher des Speichers 8 abgelegt.

Dem Codewort folgt die Telefonnummer "0964753426" der Sicherheitszentrale 6, wobei diese Telefonnummer durch ein weiteres Sonderzeichen "D" vom Codewort getrennt ist Der Telefonnummer der Sicherheitszentrale folgt ein weiteres Sonderzeichen "D" und die Kundennummer "645328" Das Datentelegramm wird durch die Sonderzeichen "CC" beendet

Mit der Übertragung dieses Datentelegrammes erhält das Telefonwahlgerät die für die Benutzung notwendigen Daten Das empfangene Datentelegramm wird bei einer bevorzugten Ausführungsform der Erfindung an die Sicherheitszentrale 6 zuruckgesendet. Auf diese Weise kann dort überprüft werden, ob das Datentelegramm fehlerfrei übertragen wurde Die Sicherheitszentrale kann dann weiterhin ein Quittierungssignal an das Telefonwählgerät zurücksenden um die Richtigkeit des übertragenen Datenwortes zu bestätigen.

Bei den Datentelegrammen nach Figur 2 ist vorgesehen, die Kundennummer als neues Codewort zu verwenden. Somit besteht also das Codewort bei einer weiteren Übertragung eines Datentelegrammes nach Figur 2b aus der Kundennummer des vorhergehenden Datenwortes. Gleichzeitig wird eine neue Kundennummer "123144" zugeteilt, die das Codewort für die nächste Übertragung nach Figur 2c bildet.

Bei dem Datentelegramm nach Figur 2c wird beispielsweise das Telefonwahlgerat von der Sicherheitszentrale deaktiviert, wenn der Kunde seine Vertrag kündigt oder in Zahlungsverzug ist. Die Telefonnummer der Sicherheitszentrale und die Kundennummer werden dabei gelöscht.

## Patentansprüche

1. Verfahren zur Eingabe von Initialisierungsdaten bei der Inbetriebnahme eines Tetefonwahlgerätes zur Weiterleitung einer Alarmmeldung von einem Alarmsystem an eine Sicherheitszentrale, wobei die Initialisierungsdaten zumindest die Teilnehmemummer der Sicherheitszentrale und eine Identifikationsnummer beinhalten,
**dadurch gekennzeichnet, dass**
die Eingabe der Initialisierungsdaten durch Fernübermittlung eines Datentelegramms von der Sicherheitszentrale zum Telefonwahlgerät vorgenommen wird.

2. Verfahren nach Anspruch 1,
**dadurch gekennzeichnet, dass**
das von der Sicherheitszentrale übermittelte Datentelegramm ein Codewort enthält und dieses Codewort mit einem in einem Speicher des Telefonwahlgerätes abgespeicherten Codewort verglichen wird und nur bei Übereinstimmung der Codewörter die Initialisierungsdaten in einem Speicher des Telefonwahlgerätes abgelegt werden.

3. Verfahren nach Anspruch 1 oder 2,
**dadurch gekennzeichnet, dass**
das Datentelegramm nach dem Empfang im Telefonwahlgerät an die Sicherheitszentrale zurückgesendet wird.

4. Verfahren nach Anspruch 3,
**dadurch gekennzeichnet, dass**
die an die Sicherheitszentrale rückgesendeten Daten auf einer Anzeigeeinheit der Sicherheitszentrale dargestellt werden.

5. Verfahren nach einem der Ansprüche 1 bis 4,
**dadurch gekennzeichnet, dass**
mit jedem übermittelten Datentelegramm ein neues Codewort übertragen wird, das für die nächste Übermittlung eines Datentelegramms gültig ist.

6. Verfahren nach einem der Ansprüche 1 bis 5,
**dadurch gekennzeichnet, dass**
die Übermittlung der Datentelegramme durch eine DTMF-Ziffernfolge erfolgt.

7. Vorrichtung zur Durchführung des Verfahrens nach den Ansprüchen 1 bis 6, bestehend aus
- einem Telefonwahlgerät (1),
- einem MFV-Sender (2) und einem MFV-Empfänger (3),
- einem Alarmsystem und
- einer Sicherheitszentrale
wobei das Telefonwählgerät mit dem MFV-Sender (2) und der MFV-Empfänger (3) verbunden ist und über eine Eingabeeinheit verfügt und ein MFV-Sender (2) und ein MFV-Empfänger (3) über eine Telefonverbindung mit der Sicherheitszentrale (6) verbunden sind,
**dadurch gekennzeichnet, dass**
die Vorrichtung Mittel zur Erstinbetriebnahme des Telefonwahlgerätes durch den Empfang eines von der Sicherheitszentrale übertragenen Datentelegramms mitteis des MFV-Empfängers (3) beinhaltet.

8. Vorrichtung nach Anspruch 7
**dadurch gekennzeichnet, dass**
das Telefonwahlgerät (1) einen ROM-Speicher (7) zur Abspeicherung eines voreingestellten Codewortes aufweist.

9. Vorrichtung nach Anspruch 7 oder Anspruch 8,
**dadurch gekennzeichnet, dass**
das Telefonwahlgerät (1) einen wiederbeschreibbaren Speicher (8) zur Abspeicherung von Datentelegrammen und geänderten Codewörtern aufweist.

10. Vorrichtung nach einem der Ansprüche 7 bis 9,
**dadurch gekennzeichnet, dass**
das Telefonwahlgerät (1) in einem Anrufbeantworter integriert ist.

## Claims

1. Method for inputting initialization data during the activation of a telephone dialler for relaying an alarm signal from an alarm system to a security centre, wherein the initialization data include at least the subscriber number of the security centre and an identification number, **characterized in that** the initialization data are inputted by remote communication of a data telegram from the security centre to the telephone dialler.

2. Method according to Claim 1, **characterized in that** the data telegram communicated by the security centre contains a codeword and said codeword is compared with a codeword stored in a memory of the telephone dialler and the initialization data are stored in a memory of the telephone dialler only if the codewords match.

3. Method according to Claim 1 or 2, **characterized in that** the data telegram is retransmitted to the security centre after it is received in the telephone dialler.

4. Method according to Claim 3, **characterized in that** the data retransmitted to the security centre are displayed on a display unit in the security centre.

5. Method according to one of Claims 1 to 4, **characterized in that** a new codeword that is valid for the next communication of a data telegram is transmitted with every data telegram communicated.

6. Method according to one of Claims 1 to 5, **characterized in that** the data telegrams are communicated by a DTMF digit sequence.

7. Device for performing the method according to Claims 1 to 6, comprising
- a telephone dialler (1),
- a DTMF transmitter (2) and a DTMF receiver (3),
- an alarm system and
- a security centre,
wherein the telephone dialler is connected to the DTMF transmitter (2) and the DTMF receiver (3) and has an input unit, and a DTMF transmitter (2) and a DTMF receiver (3) are connected via a telephone connection to the security centre (6), **characterized in that** the device comprises means for the primary activation of the telephone dialler by the receipt of a data telegram transmitted by the security centre by means of the DTMF receiver (3).

8. Device according to Claim 7, **characterized in that** the telephone dialler (1) comprises a ROM memory (7) for storing a preset codeword.

9. Device according to Claim 7 or 8, **characterized in that** the telephone dialler (1) has a re-writable memory (8) for storing data telegrams and modified codewords.

10. Device according to one of Claims 7 to 9, **characterized in that** the telephone dialler (1) is incorporated in an answering machine.

## Revendications

1. Procédé pour introduire des données d'initialisation lors de la mise en service d'un sélecteur de numérotation téléphonique pour la transmission d'une signalisation d'alarme depuis un système d'alarme à un central de sécurité, les données d'initialisation contenant au moins le numéro d'abonné du central de sécurité et un numéro d'identification, **caractérisé en ce que** l'introduction des données d'initialisation est réalisée par télétransmission d'un télégramme de données depuis un central de sécurité au sélecteur de numérotation téléphonique.

2. Procédé selon la revendication 1, **caractérisé en ce que** le télégramme de données transmis par le central de sécurité contient un mot de code et ce mot de code est comparé à un mot de code mémorisé dans une mémoire du sélecteur de numérotation téléphonique, et uniquement en cas de coïncidence des mots de code, les données d'initialisation sont mémorisées dans la mémoire du sélecteur de numérotation téléphonique.

3. Procédé selon la revendication 1 ou 2, **caractérisé en ce qu'**après réception dans le sélecteur de numérotation téléphonique, le télégramme de données est renvoyé au central de sécurité

4. Procédé selon la revendication 3, **caractérisé en ce que** les données renvoyées au central de sécurité sont représentées sur une unité d'affichage du central de sécurité.

5. Procédé selon l'une des revendications 1 à 4, **caractérisé en ce qu'**avec chaque télégramme de données transmis est transmis un nouveau mot de code qui est valable pour la transmission suivante d'un télégramme de données.

6. Procédé selon l'une des revendications 1 à 4, **caractérisé en ce que** la transmission du télégramme de données s'effectue au moyen d'une suite de chiffres DTMF.

7. Dispositif pour la mise en oeuvre du procédé selon les revendications 1 à 6, constitué par
- un sélecteur de numérotation téléphonique (1),
- un émetteur MFV (2) et un récepteur MFV (3),
- un système d'alarme, et
- un central de sécurité,
et dans lequel le sélecteur de numérotation téléphonique est relié à l'émetteur MFV (2) et au récepteur MFV (3) et dispose d'une unité d'entrée, et un émetteur MFV (2) et un récepteur MFV (3) sont reliés au central de sécurité (6) par l'intermédiaire d'une liaison téléphonique,
**caractérisé en ce que** le dispositif contient des moyens pour la première mise en service du sélecteur de numérotation téléphonique au moyen de la réception d'un télégramme de données transmis par le central de sécurité, au moyen du récepteur MFV (3).

8. Dispositif selon la revendication 7, **caractérisé. en ce que** le sélecteur de numérotation téléphonique (1) contient une mémoire RQM (7) pour la mémorisation d'un mot de code préréglé.

9. Dispositif selon la revendication 7 ou la revendication 8, **caractérisé en ce que** le sélecteur de numérotation téléphonique (1) comporte une mémoire (8), dans laquelle une réinscription peut être effectuée, pour la mémorisation de télégrammes de données et de mots de code modifiés.

10. Dispositif selon l'une des revendications 7 à 9, **caractérisé en ce que** le sélecteur de numérotation téléphonique est intégré dans un répondeur téléphonique.
